# EUROPEAN PATENT SPECIFICATION

(11) **EP 1 181 486 B1**
(45) Date of publication and mention of the grant of the patent: **06.12.2006**
(21) Application number: 00929595.7
(22) Date of filing: 30.05.2000
(51) Int. Cl.: F23G 5/04, F23G 5/30, F23G 7/00

(54) **METHOD AND APPARATUS FOR BURNING MATERIALS WITH LOW COMBUSTIBILITY**
VERFAHREN UND VORRICHTUNG ZUM VERBRENNEN VON STOFFEN MIT SCHWER AUSBRENNENDEN BESTANDTEILEN
PROCEDE ET APPAREIL PERMETTANT DE BRULER DES MATERIAUX A FAIBLE COMBUSTIBILITE

(30) Priority: 31.05.1999 FI 991237
(43) Date of publication of application: 27.02.2002
(73) Proprietor: Fortum Power and Heat Oy, 02150 Espoo (FI)
(72) Inventor: ALIN, Jari, FI-02430 Masala (FI)
(74) Representative: Hovi, Simo Pekka Tapani
(86) International application number: PCT/FI2000/000485
(87) International publication number: WO 2000/073703

(56) References cited:
- DE-A1- 4 431 564
- US-A- 4 635 379
- US-A- 4 656 955
- US-A- 4 932 336
- PATENT ABSTRACTS OF JAPAN vol. 7, no. 279 (M-262) & JP 58 156 112 A (BABCOCK HITACHI K.K.) 17 September 1983

## Description

The invention relates to a method according to the preamble of claim 1 for the treatment by combustion of wet municipal sludge, industrial sewage sludge or other such wet material which is difficult to treat.

The invention also relates to an arrangement for implementing the method.

Different processes for purifying water produce considerable amounts of wet sludge which cannot as such be used for any purpose. Often the harmful substances contained in the sludge are in water-soluble form or the heavy metal content is so great that the sludge cannot be exploited for earthworks nor in any other way be spread into the environment. The sludge is also difficult to handle in terms of hygiene because it constitutes an effective growth substrate for various kinds of bacteria and may already be contaminated by bacteria from the waste to be purified. This is true both for sewage water from the forest industry which may contain substantial amounts of organic material providing a good growth substrate for bacteria, and for municipal waste which contains a vast number of different kinds of bacteria strains.

In the forest industry sludge from sewage treatment plants is typically combusted in a bark combustor mixed with some type of solid fuel. Sludge combustion frequently leads to sacrifices as regards boiler capacity and gives rise to operational trouble and without exception reduces boiler efficiency. No large amounts of sludge can be added into the boiler because such addition interferes with the combustion process, and thus, the amount of sludge that can be used in the boiler is dependent on the boiler capacity.

Municipal wastewater sludge is treated either by means of a combination of sludge digestion and composting, composting only, or by heaping it into a dumping area. All these methods require massive arrangements either in the form of buildings or land. In both cases, sludge treatment incurs considerable costs to the operator in question.
Sludge that has undergone composting and sludge digestion can be mixed with soil or other such material and used for earthworks provided that it does not contain any harmful substances. Municipal waste has been used both for soil amendment in fields and for earthworks in urban construction projects but the use of the material has been objected to due to its origin.

One alternative for waste treatment is burning at a specific incineration plant, whereby its volume is essentially reduced. The problem with incineration plants lies in that wet sludge is difficultly burned without a supporting fuel, which in turn renders the incineration expensive. In addition, incineration plants have tended to be complicated. In comparison with the investment in equipment and the cost of operation, no great thermal power is achieved which could be used for producing electricity or, for instance, district heat, and thus, the energy generated during the incineration fails to essentially reduce the cost of sludge treatment. The sludge can also be dried and pressed into pellets possibly mixed with a suitable admixture, thus achieving a sufficiently inert mass which can then be taken for instance to an ordinary dump pit without any risks to the environment. European Patent No. 0 526 458 describes a method wherein the sludge being treated is divided into two fractions, part of which is dried and part burned in a fluidized bed boiler. The heat from the fluidized bed boiler is used for drying the sludge in a fluidized bed dryer and finally, the dried sludge is combined with the sludge ash in the boiler and the mixture is burned. The equipment is very complicated and in order to function it requires a sludge having a sufficiently low initial moisture content, or alternatively the use of additional fuel in the boiler generating the drying energy.

US 4,923,336 describes an apparatus for burning dewatered collected product consisting predominately of plastics. In this apparatus the material to be burned is dried to a very low moisture content of 25% and the heat value of the material is high. The material that is handled can be burned very easily. The heat can be recovered for drying the material and for generation of steam.

US 2,148,981 describes a method and an apparatus for the disposal of sewage wastes wherein the waste materials, from which the may portion of the water has been removed, are dried by the action of a current of superheated steam.

The aim of the present invention is to achieve a novel method for sludge combustion allowing the elimination of the above-described problems related to the prior art.

The invention is based on drying the sludge with a steam dryer and combusting it in a boiler and transferring all of the thermal energy produced to sludge drying.

According to a preferred embodiment of the invention, the temperature in the dryer is controlled by mixing the sludge with water from the dryer condenser produced during steam condensation.

More specifically, the combustion method according to the invention is characterized by what is stated in the characterizing part of claim 1.

The arrangement according to the invention, then, is characterized by what is stated in the characterizing part of claim 9.

The invention achieves considerable benefits.

Apart from start-ups, the process is independent of other fuels. No supporting fuel is needed with normal sludges which are to be heaped into a dumping area and have a moisture content of 75 to 85 %; the heat released during the combustion of the sludge dry matter is sufficient for drying the fuel. Furthermore, any heat released can be exploited as district heat.

The fuel can be dried by removing 75 to 90 % of its pre-drying water content. In this manner, a final moisture content of less than 40 % is achieved. As the fuel is dry and there are no heat transfer surfaces in the furnace, a high-temperature reducing zone can be created in the combustion chamber where nitric oxides derived from the fuel can be reduced. With other methods of sludge combustion, such a zone is either difficult or impossible to achieve.

As no supporting fuel is needed, the amount of flue gas in the combustion equipment is very low compared to the combustion of moist sludge admixed with a supporting fuel. The removal of water from the fuel in the dryer and the low residual oxygen content (excess air) of the flue gas which is possible thanks to the advanced combustion techniques both have a similar effect. If a corresponding amount of sludge was combusted using natural gas as supporting fuel, the flue gas flow in the combustor would be three times and the surface area of the furnace grate five times greater than in the process of the invention. If the supporting fuel comprised bark, the flue gas flow would be more than four times greater. A small amount of flue gas leads to small smoke ducts and small smoke deposition equipment. In flue gases, harmful substances are in a more concentrated form than usual, wherefore it is easier than usual to achieve small absolute emissions. The smoke deposition system can be constructed not only compact in size but also simple because advanced combustion techniques naturally lead to small N0ₓ emissions and complete combustion.

The combustion equipment is small in physical size. As an example it may be cited that the sludge from the Viikki sewage treatment plant which treats all the sewage from the City of Helsinki can be combusted by means of an arrangement whose fuel power as calculated according to the thermal value of the dried sludge is 4.5 MW. The arrangement contains no connections to a steam power plant and can therefore easily be arranged in the vicinity of a sewage treatment plant. The process lacks the conventional reception and treatment system for solid fuel (i.e. receiving station, fuel strainer, crusher) altogether and in this respect the costs are smaller than those of a plant of similar capacity for solid fuel. Equally, the arrangement lacks a process water plant.

When sludge is treated having a moisture content of about 85 %, the fuel power of the sludge is sufficient to dry the entire fuel flow. When the initial moisture content of the sludge is smaller than this, the flue gas contains more heat than is required for drying. Instead of the injection of condensate mentioned above an excess of fuel compared to the need thereof may then be introduced into the dryer. Part of the dried fuel is extracted from the process and may be fed e.g. into an incineration plant where it improves the average quality of fuel or replaces some of the supporting fuel.

The combustor is used for disposing of the organic fraction of the sludge and a secondary purpose is to exploit the thermal value of the organic fraction. In sewage treatment plants, one alternative for achieving both aims comprises sludge digestion in an anaerobic reactor, whereby typically about half of the organic fraction of the sludge is removed and the remaining part must be heaped or composted. Part of the material removed can be recovered from the reactor as methane which may then be used as fuel. The combustor of the invention renders the expensive anaerobic reactor with proneness to malfunction and its auxiliary equipment superfluous.

Today, sewage sludges are treated particularly in the wood industry in systems for conveying solid fuel, such systems being partly open and in their entirety contaminated by bacteria. Therefore, the risk of infection during use and maintenance is significant. In the present process the sludge can be treated in a closed system in a more hygienic manner and after drying the risk of sludge-derived infection is notably small.

In the following, the invention is examined by means of a number of working examples and with reference to the annexed drawings.
Fig. 1 is a block diagram of a process implemented in accordance with the invention.
Fig. 2 is a schematic view of a combustion arrangement according to a preferred embodiment of the invention.

Below, the term "total amount of heat released in the combustor" is used to refer to the amount of heat which is recovered from the flue gas flow by means of heat exchangers prior to conducting the flue gas flow into a chimney.

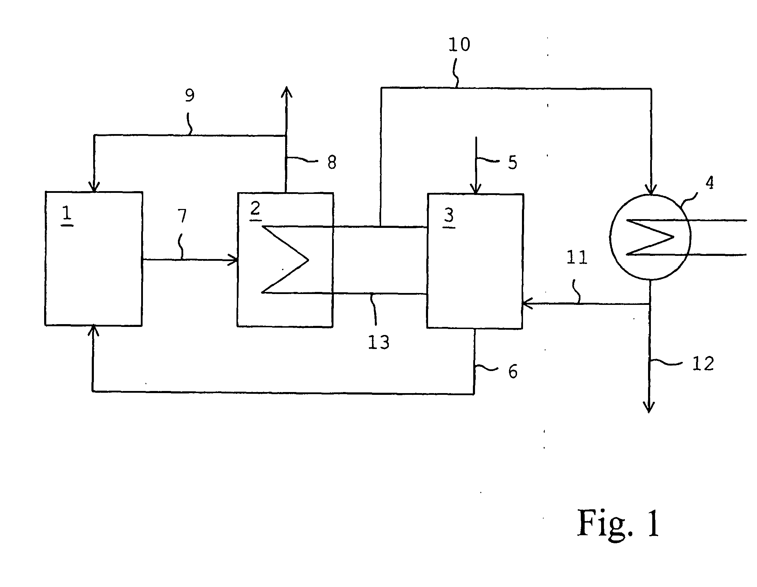

The apparatus of Fig. 1 comprises a combustion arrangement 1 in which the material being treated is combusted, a steam dryer superheater 2, a steam dryer 3 in which the sludge is dried, a dryer condenser 4, and the required pipelines and connections between the devices. A feeder line 5 for moist sludge and a condensate line 11 used for controlling the power of the dryer enter the dryer 3. A fuel line 6 for feeding dried sludge into the combustor 1 and a drying steam circuit 13 exit the dryer 3, the drying steam circuit passing via the superheater 2 and returning to the dryer 3. The drying steam circuit 13 enters the dryer 3 superheater 2 and returns from the superheater 2 to the dryer, and furthermore, there is a flue gas line 7 from the combustor 1 to the superheater. A flue gas line 8 exits the superheater 2, being divided into a circuit line 9 returning to the combustor 1 and a line which leads to smoke deposition equipment and chimney. The circuit line 9 for flue gas and the fuel line 6 from the dryer lead to the combustor 1 and the flue gas line 7 passes from the combustor to the dryer superheater 2.

The main components of a preferred embodiment of the sludge combustion process of the invention comprise a pressurized steam dryer, an adiabatic fluidized bed furnace and smoke deposition equipment. The sludge entering the process is mechanically dried to a moisture content corresponding to that applied in alternative disposal methods. The sludge is taken to the pressurized dryer where it is subject to drying by means of hot recirculated steam. Depending on the application in question, the steam generated during drying can be used for producing water-transmitted district heat or low-pressure industrial steam. The pressure in the dryer depends on the application; in the production of water-transmitted district heat, it would be in the range of 3 to 5 bar. The dried sludge is combusted in a fluidized bed furnace. The furnace is completely of masonry, i.e. its walls contain no heat transfer surfaces to allow the maintenance of a high combustion temperature. The temperature in the furnace is controlled by means of circulating gas by feeding in cooled flue gas from the dryer superheater when needed. In other respects, the combustion techniques used comprise ordinary bubbling fluidized bed combustion.

The heat released during combustion is recovered in the superheater for drying steam. The heat passes in its entirety through the drying system and ends up in the condenser for drying steam where it can be exploited. Thus, the concept does not involve the use of a conventional waste heat boiler.

The temperature level in the condenser depends on the application and is approximately 140 °C at the pressure mentioned (4 bar). Should the thermal power required for drying be less than the heat released during combustion, an amount of condensate may be injected into the dryer circuit. This ensures the transfer of the flue gas heat into the dryer condenser, and again, no other heat transfer surfaces are needed. Particularly in instances where the material being treated is dry whereby less energy is required for drying and, correspondingly, proportionally more heat is released during combustion, condensate must be injected into the drying circuit. The concept behind the invention is that the total amount of thermal energy generated in the combustor is taken into the dryer circuit in the form of drying steam energy, whereby the process is controllable by means of condensed water introduced into the dryer circuit.

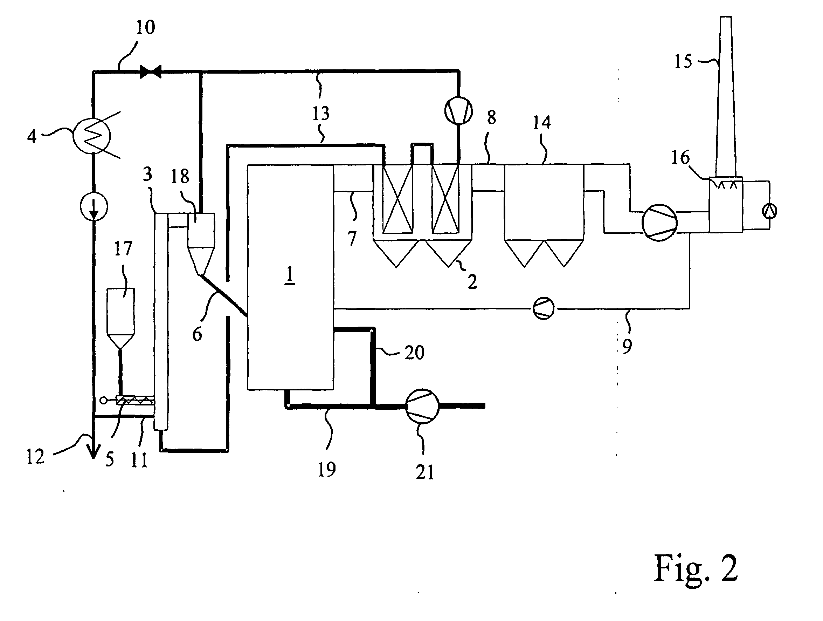

Fig. 2 depicts a preferred embodiment of the invention wherein the dryer is a pressurized steam dryer 3 and the combustor comprises an adiabatic fluidized bed furnace 1. The material to be treated, i.e. the moist sludge is introduced into a feeder tank 17 from which it is forwarded to the dryer 3 e.g. by means of a feed screw 5. Superheated pressurized steam from the superheater 2 is taken to the dryer 3. The hot pressurized steam flows quickly through the dryer and conveys the material being dried. Simultaneously, thermal energy from the steam is passed to the material being dried, whereby part of the water contained therein steams off and the material is dried. The recirculated steam is separated from the dried matter, termed fuel in the following process steps, in a cyclone 18. The fuel is taken to an adiabatic fluidized bed furnace 1 and the steam back to the dryer superheater 2 along line 13 and to the condenser 4 along line 10. A partial fraction of the steam taken to the superheater 2 is conveyed further back to the dryer.

Air is introduced into the furnace 1 by means of a fan 21 at least as fluidized bed air in the lower part of the furnace and as secondary air 20 above the fluidized bed. By supplying air into the furnace in different ways combustion conditions can be achieved where the production of harmful substances such as nitric oxides is at its minimum. As the function of different kinds of combustion apparatuses has been described in many sources, no closer description of the combustion event itself is included herein. The furnace 1 is totally of masonry, i.e. its walls contain no heat transfer surfaces, which makes it possible to maintain an elevated combustion temperature. Flue gases are conveyed to the dryer2 superheater 2 along line 7 and there their thermal energy is recovered. According to the invention, any thermal energy generated during combustion is transferred to the recirculated steam of the dryer 3 in the superheater 2. Thus, the furnace 1 and the flue gas line 7 contain no other heat transfer surfaces for extracting thermal energy from the combustion process. If need be, a combustion air preheater arranged after the superheater may be used. A combustion air preheater arranged in the flue gas line 7 does not remove thermal energy from the combustion process but instead returns it as a higher energy level of the combustion air.

From the dryer 3 superheater 2 the cooled flue gases are taken to a solid matter separator 14 along line 8 and from there to a gas scrubber 16 and further to a chimney. After the solid matter separator 14 part of the cooled flue gases can be returned to the furnace along line 9 for controlling the temperature in the furnace. The temperature of the furnace can be lowered by feeding cooled flue gases into it without using any cooling external to the process. As the flue gases have not left the process or the gas circulation of the furnace 1, returning them cooled into the furnace does not change the energy balance of the combustion process. Thus, cooling the furnace in this manner is economic.

Process control is based on controlling the circulation of steam and condensate in the dryer. As all of the energy generated during the combustion of dried sludge, in other words fuel, is recovered as energy for the recirculated steam in the dryer by means of the superheater, the capacity of the superheater and the amount of recirculated steam must be sufficient to allow reception of the amount of heat produced by the fuel. The purpose of controlling is to keep to mass flow of waterless fuel unchanged independent of variations in moisture content. When the amount of water contained in the sludge is reduced, its amount of fuel per volumetric unit is increased and with a constant volume flow even the amount of thermal energy provided by the combustion arrangement is increased. At the same time, a drier fuel is obtained if the conditions in the dryer are kept unchanged. Thus, the temperature of the dryer must be regulated to adapt dryer efficiency in accordance with fuel moisture content. In the case of dry fuel, the temperature of the dryer must be lower and with fuels having a higher moisture content the temperature may be increased. Furthermore, the temperature in the dryer must be kept sufficiently low to essentially prevent the occurrence of pyrolysis. Temperature and power control of the dryer are carried out by adding water into the dryer via line 11. Condensed water formed in the condenser 4 for recirculated steam is supplied into the dryer via this line 11. The amount of recirculated steam is usually substantially greater than the amount of water removed from the treated material in the dryer 3 in order to guarantee sufficient controllability and an adequate amount of steam. The amount of water travelling through the condensate circulation may be even 2 to 3 times the amount of water entering the process with the treated material. Thus, practically under all process conditions condensed water is fed into the dryer 3. When a drop in the dryer temperature is desired, the amount of condensed water is increased, and accordingly, when a rise in the temperature is desired, the amount of condensed water is decreased. However, the amount of steam must always be sufficient to cool the amount of heat generated in the combustor. Dryer temperature control fulfils this requirement well because more condensed water is supplied when the fuel is drier, i.e. has a higher thermal value, whereby also the amount of steam circulating in the superheater is increased. If need be, the excess steam produced during the drying of the fuel is removed as condensed water via line 12. Additionally, a water feed connection can be added to the arrangement, through which water can be fed into the system for purification or in order to form a sufficient amount of steam e.g. during activation and start-up.

Even solutions differing from the above-described embodiments are feasible within the scope of the invention.

The design and the volume flows of the different materials travelling in the process vary according to application and the capacity of the arrangement. However, a number of features are shared by all systems. The dryer pressure is preferably from 3 to 15 bar. The temperature of the condenser in the steam and condensate circulation of the dryer is approximately 130 to 200 °C and the temperature of the steam exiting the dryer 3 is 160 to 230 °C. The temperature of the superheated steam, prior to being taken to the dryer, is preferably 400 °C. Since no heat transfer surfaces are needed in the solution of the invention, the temperature of the furnace can be kept high. In order to reduce NOx emissions the temperature in the furnace should preferably be of the order of 1000 °C and as on the other hand a temperature of over 850 °C is generally required for waste incineration, the maximum temperature of the furnace should be kept within this range. If the material being treated is of great fuel value, i.e. when for instance dry sludge is used, part of the fuel may be removed from the process and used as fuel in some other process, if a suitable combustion arrangement is available for use.

Any pressurized steam dryer can be used as the dryer of the arrangement, in addition to the above example, e.g. a fluidized bed dryer is feasible. Instead of a fluidized bed furnace, any combustion arrangement suited for the combustion of dried sludge or the like can be used. However, it is of advantage to be able to control the temperature of the combustor adiabatically in the above-described manner by circulating flue gas. The condensed water used for controlling the temperature of the dryer can be mixed directly into the dryer fuel feed instead of the dryer. Instead of condensed water, any water available may be used, for instance untreated lake water, but this will lead to an increased amount of dirty condensate. If the combustion apparatus is arranged in connection with a sewage treatment plant, however, the production of dirty water does not present problems.

## Claims

1. A method for treating wet material which is difficult to treat by combustion, comprising
- drying the material being treated in a steam dryer (3),
- combusting the dried material in a combustion apparatus (1),
- heating steam for the heat demand of the steam dryer (3) with the aid of thermal energy formed by the material combusted in the combustion apparatus (1), and
- conducting the heated steam into the steam dryer (3) for drying the material being treated,
- wherein the step of heating steam consists in superheating the steam in a superheater (2) to form superheated steam by transferring the total amount of heat released from the material being treated in the combustion apparatus (1) into the steam circuit of the steam dryer (3), **characterized by**
- using a pressurised steam dryer for drying the material to be treated.

2. The method according to claim 1, **characterized by** conducting at least part of the steam from the steam dryer into a condenser (4) and by feeding at least part of the condensed water into the dryer (3) for controlling the temperature of the dryer (3).

3. The method according to claim 2, **characterized by** removing at least part of the steam from the dryer (3) from the condensed water circulation of the dryer (3) as condensed water.

4. The method according to claim 3, **characterized by** removing as condensed water an amount of water from the steam circulation which at the most corresponds to the amount of water entering the steam circulation of the dryer with the treated material.

5. The method according to claim 1, **characterized by** recovering heat generated during combustion in the superheater of the steam dryer (3) only.

6. The method according to claim 1, **characterized by** using an adiabatic fluidized bed furnace as the combustion arrangement and by controlling the temperature of the combustion arrangement by conducting cooled flue gas from the combustion arrangement into it.

7. The method according to claim 1, **characterized by** controlling the temperature of the dryer (3) by feeding water into the dryer (3) from a source external to the steam circulation of the dryer.

8. The method according to claim 2 or 7, **characterized by** mixing water into the feed flow into the dryer (3) of material to be treated whereby it is conveyed into the dryer (3) along with the material to be created.

9. An arrangement for treatment by combustion of which is difficult to treat wet material, comprising
- a steam dryer (3) for drying the material being treated,
- a combustion apparatus (1) for combusting the dried material,
- a heater (2) for heating steam for the heat demand of the steam dryer (3) by means of the thermal energy generated by the material combusted in the combustion apparatus (1), and
- means (13) for conveying the heated steam into the steam dryer (3) for drying the material being treated,
- the heater apparatus being a superheater (2) that is designed such that the amount of heat released from the material being treated in the combustion apparatus (1) is transferred into the steam circuit of the steam dryer (1) in its entirety,
**characterized in that**
- the steam dryer is a pressurized steam dryer (3).

10. The arrangement according to claim 9, **characterized by** a condenser (4) and means (10) for conveying at least part of the steam from the steam dryer into the condenser (4) and means (11) for feeding at least part of the condensed water into the dryer (3) for controlling the temperature of the dryer (3).

11. The arrangement according to claim 9, **characterized by** means (12) for removing at least part of the steam from the dryer (3) from the condensed water circulation of the dryer (3) as condensed water.

12. The arrangement according to claim 9, **characterized in that** all heat transfer surfaces of the combustion apparatus (1) and the flue gas line (7, 8) thereof are in the steam dryer (3) superheater.

13. The arrangement according to claim 9, **characterized in that** the combustion arrangement is constituted by an adiabatic fluidized bed furnace comprising a flue gas circulation system (7, 8, 9) for controlling the temperature of the combustion arrangement by conveying cooled flue gas thereto.

14. The arrangement according to claim 9, **characterized by** means for feeding water into the steam circulation of the dryer (3).

15. The arrangement of claim 9 or 14, **characterized by** means for mixing water into the feed flow into the dryer of material to be treated.

## Patentansprüche

1. Verfahren zum Behandeln von schwer erwärmbarem, feuchtem Material durch Verbrennen, aufweisend:
- Trocknen des zu behandelnden Materials in einem Dampftrockner (3),
- Verbrennen des getrockneten Materials in einer Verbrennungs-Vorrichtung (1),
- Erwärmen des Dampfes auf die für den Dampftrockner (3) erforderliche Wärme mit Hilfe von thermischer Energie, welche von dem in der Verbrennungs-Vorrichtung (1) verbrannten Material gebildet wird, und
- Einleiten des erwärmten Dampfes in den Dampftrockner (3), so dass das zu behandelnde Material getrocknet wird,
- wobei der Schritt des Erwärmens des Dampfes ein Überhitzen des Dampfes in einem Überhitzer (2) aufweist, so dass Heißdampf durch Übertragen der gesamten Wärmemenge, welche von dem in der Verbrennungs-Vorrichtung (1) zu behandelnden Material freigegeben wird, in den Dampfkreislauf des Dampftrockers (3) hinein ausgebildet wird,
**gekennzeichnet durch**
- Verwenden eines Druchdampftrockners zum Trocknen des zu behandelnden Materials.

2. Verfahren gemäß Anspruch 1, **gekennzeichnet durch** Einleiten von wenigstens einem Teil des Dampfes aus dem Dampftrockner in einen Kondensator (4) hinein und **durch** Einspeisen von wenigstens einem Teil des Kondenswassers in den Trockner (3) hinein, so dass die Temperatur des Trockners (3) steuerbar ist.

3. Verfahren gemäß Anspruch 2, **gekennzeichnet durch** Beseitigen von wenigstens einem Teil des Dampfes aus dem Trockner (3) aus der Kondenswasser-Zirkulation des Trockners (3) als Kondenswasser.

4. Verfahren gemäß Anspruch 3, **gekennzeichnet durch** Beseitigen einer Wassermenge aus der Dampf-Zirkulation, welche am meisten mit der Wassermenge korrespondiert, welche in die Dampf-Zirkulation des Trockners mit dem behandelten Material einmündet, als Kondenswasser.

5. Verfahren gemäß Anspruch 1, **gekennzeichnet durch** Zurückgewinnen von Wärme, welche nur in dem Überhitzer des Dampftrockners (3) während dem Verbrennen erzeugt wird.

6. Verfahren gemäß Anspruch 1, **gekennzeichnet durch** Verwenden eines adiabatischen Wirbelschichtofens als die Verbrennungs-Einrichtung und **durch** Steuern der Temperatur der Verbrennungs-Einrichtung **durch** Einleiten von abgekühltem Rauchgas aus der Verbrennungs-Einrichtung in dieselbe.

7. Verfahren gemäß Anspruch 1, **gekennzeichnet durch** Steuern der Temperatur des Trockners (3) **durch** Einspeisen von Wasser in den Trockner (3) hinein aus einer Quelle, welche außerhalb der Dampf-Zirkulation des Trockners ist.

8. Verfahren gemäß Anspruch 2 oder 7, **gekennzeichnet durch** Einmischen von Wasser in den Einspeisefluss hinein in den Trockner (3) von zu behandelndem Material hinein, wobei es zusammen mit dem zu behandelnden Material in den Trockner (3) geleitet wird.

9. Einrichtung zum Behandeln von schwer erwärmbaren, feuchtem Material durch Verbrennen, aufweisend:
- einen Dampftrockner (3) zum Trocknen des zu behandelnden Materials,
- eine Verbrennungs-Vorrichtung (1) zum Verbrennen des getrockneten Materials,
- einen Heizkörper (2) zum Erwärmen von Dampf auf eine für den Dampftrockner (3) erforderlichen Wärme mittels thermischer Energie, welche von dem in der Verbrennungs-Vorrichtung (1) verbrannten Material ausgebildet wird, und
- Mittel (13) zum Einleiten des erwärmten Dampfes in den Dampftrockner (3) hinein, so dass das zu behandelnde Material getrocknet werden kann,
- wobei die Heiz-Vorrichtung (3) ein Überhitzer (2) ist, welcher derart ausgebildet ist, das die Wärmemenge, welche aus dem in der Verbrennungs-Vorrichtung (1) zu behandelnden Material freigegeben wird, in den Dampf-Kreislauf des Dampftrockners (1) vollständig übertragen wird,
**dadurch gekennzeichnet, dass**
der Dampftrockner (3) ein Druckdampftrockner ist.

10. Einrichtung gemäß Anspruch 9, **gekennzeichnet durch** einen Kondensator (4) und Mittel (10) zum Leiten wenigstens eines Teils des Dampfes aus dem Dampftrockner in den Kondensator (4) hinein und Mittel (11) zum Einspeisen von wenigstens einem Teil des Kondenswassers in den Trockner (3) hinein, so dass die Temperatur des Trockners (3) steuerbar ist.

11. Einrichtung gemäß Anspruch 9, **gekennzeichnet durch** Mittel (12) zum Beseitigen von wenigstens einem Teil des Dampfes aus dem Trockner (3) aus der Kondenswasser-Zirkulation des Trockners (3) als Kondenswasser.

12. Einrichtung gemäß Anspruch 9, **dadurch gekennzeichnet, dass** alle Wärmeübertragungsflächen der Verbrennungs-Vorrichtung (1) und deren Rauchgasleitung (7, 8) in dem Dampftrockner (3) Überhitzer sind.

13. Einrichtung gemäß Anspruch 9, **dadurch gekennzeichnet, dass** die Verbrennungs-Vorrichtung einen adiabatischen Wirbelschichtofen aufweist, welcher ein Rauchgas-Zirkulationssystem (7, 8, 9) zum Steuern der Temperatur der Verbrennungs-Vorrichtung durch Einleiten von gekühltem Rauchgas zu derselben aufweist.

14. Einrichtung gemäß Anspruch 9, **gekennzeichnet durch** Mittel zum Einspeisen von Wasser in die Dampf-Zirkulation des Trockners (3).

15. Einrichtung gemäß Anspruch 9 oder 14, **gekennzeichnet durch** Mittel zum Einmischen von Wasser in den Fluss hinein in den Trockner von zu behandelnden Material hinein.

## Revendications

1. Procédé de traitement des matériaux humides difficiles à traiter par la combustion, comprenant :
- le séchage des matériaux traités dans un séchoir à vapeur (3),
- la combustion des matériaux séchés dans un appareil de combustion (1),
- le chauffage de la vapeur pour la chaleur nécessaire dans le séchoir à vapeur (3) à l'aide d'énergie thermale formée par les matériaux brûlés dans l'appareil de combustion (1), et
- l'arrivée de la vapeur chauffée dans le séchoir à vapeur (3) pour sécher les matériaux traités,
- dans lequel l'étape de chauffage de la vapeur consiste à surchauffer la vapeur dans un surchauffeur de vapeur (2) pour former de la vapeur surchauffée, en transférant la totalité de chaleur libérée à partir des matériaux traités dans l'appareil de combustion (1) à l'intérieur du circuit de vapeur du séchoir à vapeur (3),
**caractérisé par** l'utilisation d'un séchoir à vapeur sous pression pour sécher les matériaux à traiter.

2. Procédé selon la revendication 1, **caractérisé par** l'arrivée d'au moins une partie de la vapeur du séchoir à vapeur dans un condensateur (4), et par l'alimentation du séchoir à vapeur (3) en au moins une partie de l'eau condensée pour contrôler la température du séchoir (3).

3. Procédé selon la revendication 2, **caractérisé par** l'enlèvement d'au moins une partie de la vapeur du séchoir (3) de la circulation d'eau condensée du séchoir (3) en tant qu'eau condensée.

4. Procédé selon la revendication 3, **caractérisé par** l'enlèvement en tant qu'eau condensée, d'une quantité d'eau de la circulation de vapeur, qui, au plus, correspond à la quantité d'eau entrant dans la circulation de vapeur du séchoir avec les matériaux traités.

5. Procédé selon la revendication 1, **caractérisé par** le retour de la chaleur générée au cours de la combustion, uniquement dans le surchauffeur de vapeur du séchoir à vapeur (3).

6. Procédé selon la revendication 1, **caractérisé par** l'utilisation d'un appareil de chauffage à lit fluidisé adiabatique en tant que dispositif de combustion et en contrôlant la température du dispositif de combustion en amenant du gaz de combustion refroidi à partir du dispositif de combustion à l'intérieur de celui-ci.

7. Procédé selon la revendication 1, **caractérisé par** le contrôle de la température du séchoir à vapeur (3) en alimentant en eau le séchoir (3) à partir d'une source externe à la circulation de vapeur du séchoir.

8. Procédé selon la revendication 2 ou 7, **caractérisé par** le mélange d'eau dans le flux d'alimentation à l'intérieur du séchoir (3) de matériaux à traiter, moyennant quoi il est amené dans le séchoir (3) avec les matériaux à traiter.

9. Dispositif pour le traitement par combustion de matériaux humides difficiles à traiter, comprenant
- un séchoir à vapeur (3) pour sécher les matériaux étant à traiter,
- un appareil de combustion (1) pour la combustion des matériaux séchés,
- un appareil de chauffage (2) pour chauffer la vapeur pour la chaleur nécessaire du séchoir à vapeur (3) à l'aide d'énergie thermale générée par les matériaux brûlés dans l'appareil de combustion (1), et
- des moyens (13) pour amener la vapeur chauffée dans le séchoir à vapeur (3) afin de sécher les matériaux étant à traiter,
- l'appareil de combustion étant un surchauffeur de vapeur (2), conçu de telle sorte que la quantité de chaleur libérée à partir des matériaux à traiter dans l'appareil de combustion (1) soit transférée dans le circuit de vapeur du séchoir à vapeur (1) dans sa totalité,
**caractérisé en ce que** le séchoir à vapeur est un séchoir à vapeur sous pression (3).

10. Dispositif selon la revendication 9, **caractérisé par** un condensateur (4) et des moyens (10) destinés à amener au moins une partie de la vapeur à partir du séchoir à vapeur dans le condensateur (4), et des moyens (11) destinés à alimenter le séchoir (3) en au moins une partie de l'eau condensée afin de contrôler la température du séchoir à vapeur (3).

11. Dispositif selon la revendication 9, **caractérisé par** des moyens (12) destinés à enlever au moins une partie de la vapeur du séchoir (3) à partir de la circulation d'eau condensée du séchoir (3) en tant qu'eau condensée.

12. Dispositif selon la revendication 9, **caractérisé en ce que** toutes les surfaces de transfert de chaleur de l'appareil de combustion (1), et la ligne de gaz de combustion (7, 8) de celui-ci, sont dans 1e séchoir à vapeur (3) surchauffeur.

13. Dispositif selon la revendication 9, **caractérisé en ce que** le dispositif de combustion est constitué d'un appareil de chauffage à lit fluidisé adiabatique comprenant un système de circulation du gaz de combustion (7, 8, 9) pour contrôler la température du dispositif de combustion en amenant le gaz de combustion refroidi vers celui-ci.

14. Dispositif selon la revendication 9, **caractérisé par** des moyens destinés à alimenter en eau le système de circulation du séchoir (3).

15. Dispositif selon la revendication 9 ou 14, **caractérisé** des moyens destinés à mélanger l'eau dans le flux d'alimentation dans le séchoir des matériaux à traiter.
